(19) Europäisches Patentamt / European Patent Office / Office européen des brevets

(11) **EP 4 333 292 B1**

(12) **EUROPEAN PATENT SPECIFICATION**

(45) Date of publication and mention
of the grant of the patent:
**04.02.2026 Bulletin 2026/06**

(21) Application number: **23219496.9**

(22) Date of filing: **21.12.2023**

(51) International Patent Classification (IPC):
*H02P 21/13* (2006.01)      *B60L 15/20* (2006.01)
*H02P 21/05* (2006.01)      *F16H 57/00* (2012.01)

(52) Cooperative Patent Classification (CPC):
**H02P 21/13; B60L 15/20; H02P 21/05;** Y02T 10/72

(54) **TORQUE CONTROL SYSTEM AND METHOD FOR VEHICLE MOTOR, MEDIUM, AND VEHICLE**

DREHMOMENTSTEUERUNGSSYSTEM UND -VERFAHREN FÜR FAHRZEUGMOTOR, MEDIUM
UND FAHRZEUG

SYSTÈME ET PROCÉDÉ DE COMMANDE DE COUPLE POUR MOTEUR DE VÉHICULE, SUPPORT
ET VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.06.2023 CN 202310796735**

(43) Date of publication of application:
**06.03.2024 Bulletin 2024/10**

(73) Proprietor: **XPT EDS (Hefei) Co., Ltd.**
**Hefei City, Anhui 230601 (CN)**

(72) Inventors:
• **LIU, Chang**
  **Hefei City, 230601 (CN)**
• **HU, Jasper**
  **Hefei City, 230601 (CN)**
• **XIA, Justin**
  **Hefei City, 230601 (CN)**
• **XU, Bin**
  **Hefei City, 230601 (CN)**
• **WANG, Kai**
  **Hefei City, 230601 (CN)**

(74) Representative: **EIP**
**Fairfax House**
**15 Fulwood Place**
**London WC1V 6HU (GB)**

(56) References cited:
EP-A1- 2 840 707      WO-A1-2022/070589
US-A1- 2018 264 947    US-A1- 2023 318 501
US-B2- 9 809 213

**Description**

**TECHNICAL FIELD**

The disclosure relates to the field of control technologies for motors of electric vehicles, and specifically to a torque control system for a vehicle motor, a torque control method for a vehicle motor that is capable of being implemented by the system, a computer-readable storage medium capable of performing the method, and a vehicle including such a system.

**BACKGROUND**

A vehicle judders during running, especially during startup or braking (i.e., at a zero crossing point of a motor torque) of an electric vehicle, and a transmission system undergoes significant torsional vibrations, which makes the juddering more intense. Such a juddering phenomenon leads to shortened service life of or damage to related parts, and also worsens the problem of noise, thus bringing about a bad driving experience for users.

At present, with regard to the juddering phenomenon, in most torque control methods for a vehicle motor, a filter or a wheel speed comparison method is used to extract juddering of the motor at a rotational speed and then a torque opposite to the juddering is applied to achieve an active damping effect. For example, in the case of using the filter, only limited juddering suppression may be implemented at a zero crossing point of the motor torque. This is mainly because the filter cannot effectively extract the juddering of the motor at a rotational speed that is caused by a gear clearance. It is known from the prior art that the wheel speed comparison method may be used in a targeted manner for such juddering suppression at the zero crossing point of the motor torque, that is, a target speed of the motor is solved based on a wheel speed signal. However, the wheel speed signal has the problems of a signal delay and a low update rate, thus failing to make good compensation for the motor torque. Furthermore, a directly obtained wheel speed signal is susceptible to interference from road conditions, thus enabling a compensated torque of the motor that is obtained based on the wheel speed signal to fluctuate with juddering at a wheel speed, which is certainly not undesirable.

Patent document EP2840707A1 discloses vehicle vibration suppression control devices and vehicle vibration suppression control methods, wherein the vehicle state amount is estimated based on a first torque target value on which the lag processing has been performed and a second torque target value.

**SUMMARY**

According to different aspects, an objective of the disclosure is to provide a torque control system for a vehicle motor that is capable of preventing juddering of the motor, a torque control method for a vehicle motor, a computer-readable storage medium, and a vehicle.

In addition, the disclosure also aims to solve or alleviate other technical problems existing in the prior art.

To solve the above problems, the disclosure provides a torque control system for a vehicle motor. Specifically, the system includes the following modules:

a target torque obtaining unit configured to obtain a target torque $T_{Ref}$ of the motor that is associated with a vehicle pedal parameter;

a compensated torque calculation unit configured to calculate a compensated torque $T_{Dmp}$ of the motor; and

a theoretical torque calculation unit configured to calculate a theoretical torque $T_{Cmd}$ of the motor based on the target torque $T_{Ref}$ of the motor and the compensated torque of the motor,

the compensated torque calculation unit including an angular velocity acquisition module, a first delay module, a state observer, a second delay module, a deviation solving module, and a compensated torque calculation module, where the angular velocity acquisition module is configured to obtain an actual angular velocity $\omega_m$ of the motor that is sampled at a first frequency and an actual angular velocity $\omega_l$ of a wheel that is sampled at a second frequency less than the first frequency and converted to a motor side;

the first delay module is configured to delay the target torque $T_{Ref}$ of the motor and transmit a delayed target torque $T_e$ of the motor to the state observer;

the state observer is constructed as a double closed-loop linear observer and configured to obtain an estimated angular velocity $\hat{\omega}_m$ of the motor and an estimated angular velocity $\hat{\omega}_l$ of the wheel at the first frequency;

the second delay module is configured to: delay the estimated angular velocity $\hat{\omega}_m$ of the motor and the estimated angular velocity $\hat{\omega}_l$ of the wheel that are outputted by the state observer to make same respectively synchronous with the acquired actual angular velocity $\omega_m$ of the motor and the acquired actual angular velocity $\omega_l$ of the wheel; and calculate a deviation between the estimated angular velocity $\hat{\omega}_m$ of the motor and the actual angular velocity $\omega_m$ of the motor and a deviation between the estimated angular velocity $\hat{\omega}_l$ of the wheel and the actual angular velocity $\omega_l$ of the

wheel, where the deviations are fed back to the state observer; and
the compensated torque calculation module is configured to calculate the compensated torque $T_{Dmp}$ of the motor based on the received actual angular velocity $\omega_m$ of the motor and the received estimated angular velocity $\hat{\omega}_l$ of the wheel.

In the torque control system for a vehicle motor proposed according to a first aspect of the disclosure, the angular velocity acquisition module acquires the actual angular velocity $\omega l$ of the wheel by a vehicle controller area network (CAN) bus, and
correspondingly, the second delay module includes a second wheel delay submodule configured to delay the estimated angular velocity $\hat{\omega}_l$ of the wheel to represent a delay time $\triangle t_1$ of signal transmission lag of the CAN bus and to transmit the estimated angular velocity $\hat{\omega}_l$ of the wheel to the deviation finding module at the second frequency.

In the torque control system for a vehicle motor proposed according to the first aspect of the disclosure, the angular velocity acquisition module acquires the actual angular velocity $\omega m$ of the motor from a motor sensor, and correspondingly, the second delay module includes a second motor delay submodule configured to delay the estimated angular velocity $\hat{\omega}_m$ of the motor to represent a delay time $\triangle t_2$ of transmission lag of the sensor and to transmit the estimated angular velocity $\hat{\omega}_m$ of the motor to the deviation solving module at the first frequency.

In the torque control system for a vehicle motor proposed according to the first aspect of the disclosure, a state-space equation for the state observer is constructed as:

$$\begin{cases} \dot{\hat{x}} = A\hat{x} + Bu + L(y - \hat{y}) \\ \qquad \hat{y} = C\hat{x} \end{cases},$$

where $\hat{x}$ is a real-time state variable matrix, and $\hat{x} = \begin{bmatrix} \hat{\omega}_m \\ \hat{\omega}_l \\ \hat{\theta}_m - \hat{\theta}_l \\ \hat{T}_l \end{bmatrix}$, in which $\hat{\theta}_m$ is an estimated angle of a motor rotor,

$\hat{\theta}_l$ is an estimated angle of a loaded rotor, and $\hat{T}_l$ is an estimated torque of a load;

$y$ is an actually measured output variable matrix, and $y = \begin{bmatrix} \omega_m \\ \omega_l \end{bmatrix}$;

$\hat{y}$ is an output variable matrix, and $\hat{y} = \begin{bmatrix} \hat{\omega}_m \\ \hat{\omega}_l \end{bmatrix}$;

$C$ depends on a controlled quantity of the state observer;

$L$ is a feedback compensation matrix of 4 * 2 and is set depending on poles of a characteristic equation for the state observer;

$A, B,$ and $u$ are system structural parameters, which are respectively as follows:

$$A = \begin{bmatrix} -\dfrac{c}{J_m} & \dfrac{c}{J_m} & -\dfrac{K}{J_m} & 0 \\ \dfrac{c}{J_l} & -\dfrac{c}{J_l} & \dfrac{K}{J_l} & -\dfrac{1}{J_l} \\ 1 & -1 & 0 & 0 \\ 0 & 0 & 0 & 0 \end{bmatrix}, \quad B = \begin{bmatrix} \dfrac{1}{J_m} \\ 0 \\ 0 \\ 0 \end{bmatrix}, \quad u = [T_e]$$

where $c$ is a damping coefficient of a transmission shaft of an electric vehicle, $K$ is stiffness of the transmission shaft of the electric vehicle, $J_m$ is a rotational inertia of the motor, $J_l$ is a rotational inertia of the load, and $T_e$ is the delayed target torque of the motor.

In the torque control system for a vehicle motor proposed according to the first aspect of the disclosure, the compensated torque calculation module is configured to calculate the compensated torque TDmp of the motor based on the following formula:

$$T_{Dmp} = -K_p(\omega_m - \hat{\omega}_l)$$

,

where $K_p$ is a dimensionless control coefficient.

According to a second aspect of the disclosure, there is also proposed a torque control method for a vehicle motor that is capable of being performed by such a system. The method includes the following steps:

> an obtaining step: obtaining a target torque $T_{Ref}$ of the motor, an actual angular velocity $\omega_m$ of the motor, and an actual angular velocity $\omega_l$ of a wheel;
>
> a calculation step: calculating a compensated torque $T_{Dmp}$ of the motor based on the target torque $T_{Ref}$ of the motor, the actual angular velocity $\omega_m$ of the motor, and the actual angular velocity $\omega_l$ of the wheel; and
>
> a correction step: calculating a theoretical torque $T_{Cmd}$ of the motor based on the target torque $T_{Ref}$ of the motor and the compensated torque $T_{Dmp}$ of the motor,
>
> where the calculation step includes the following steps:

> > an estimated value obtaining step: calculating an estimated angular velocity $\hat{\omega}_m$ of the motor and an estimated angular velocity $\hat{\omega}_l$ of the wheel by means of a double closed-loop linear observer, where the estimated angular velocity $\hat{\omega}_m$ of the motor and the estimated angular velocity $\hat{\omega}_l$ of the wheel that are outputted by a state observer are delayed to make same respectively synchronous with the acquired actual angular velocity $\omega_m$ of the motor and the acquired actual angular velocity $\omega_l$ of the wheel, and calculating a deviation between the estimated angular velocity $\hat{\omega}_m$ of the motor and the actual angular velocity $\omega_m$ of the motor and a deviation between the estimated angular velocity $\hat{\omega}_l$ of the wheel and the actual angular velocity $\omega_l$ of the wheel, where the deviations are fed back to the state observer; and
> >
> > a compensated torque calculation step: calculating the compensated torque $T_{Dmp}$ of the motor based on the acquired actual angular velocity $\omega_m$ of the motor and the solved estimated angular velocity $\hat{\omega}_l$ of the wheel.

In the torque control method for a vehicle motor proposed according to the second aspect of the disclosure, in the obtaining step, the actual angular velocity $\omega l$ of the wheel is acquired from a vehicle CAN bus, and correspondingly, in the estimated value obtaining step, the estimated angular velocity $\hat{\omega}_l$ of the wheel is delayed to represent a delay time $\triangle t_1$ of signal transmission lag of the CAN bus, and the delayed estimated angular velocity $\hat{\omega}_l$ of the wheel is outputted at a second frequency for solving of the deviations.

In the torque control method for a vehicle motor proposed according to the second aspect of the disclosure, in the obtaining step, the actual angular velocity $\omega m$ of the motor is acquired from a motor sensor, and correspondingly, in the estimated value obtaining step, the estimated angular velocity $\hat{\omega}_m$ of the motor is delayed to represent a delay time $\triangle t2$ of transmission lag of the sensor, and the delayed estimated angular velocity $\hat{\omega}_m$ of the motor is outputted at a first frequency for solving of the deviations.

According to a third aspect of the disclosure, there is also proposed a computer-readable storage medium having a computer program stored thereon, where when the computer program is executed by a processor, the above torque control method for a vehicle motor is implemented.

Finally, according to a fourth aspect of the disclosure, there is also proposed a vehicle, the vehicle including the above torque control system for a vehicle motor and being capable of having the characteristics described above.

The torque control system for a vehicle motor or the torque control method for a vehicle motor according to the disclosure cannot only improve the real-time performance of the compensated torque of the motor, but also can reduce or eliminate the impacts of factors such as system parameter changes and working condition changes.

## BRIEF DESCRIPTION OF DRAWINGS

The above and other features of the disclosure will become apparent with reference to the accompany drawings, in which:

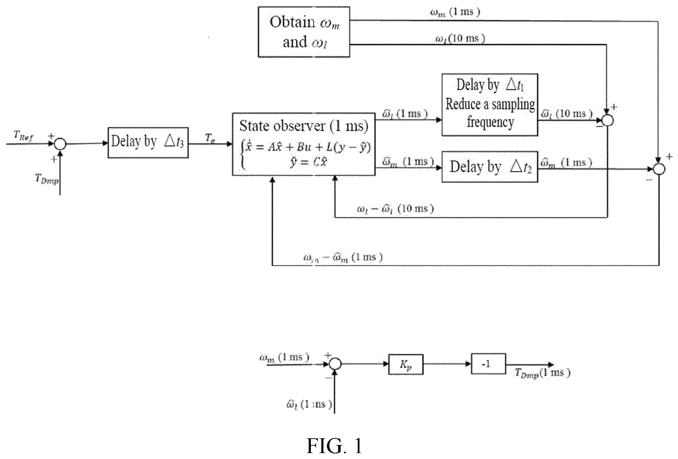

FIG. 1 is a partial flow block diagram of a torque control method for a vehicle motor according to the disclosure.

## DESCRIPTION OF EMBODIMENTS

It can be readily understood that according to the technical solution of the disclosure, a person of ordinary skill in the art may propose multiple interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

Referring to FIG. 1, a torque control system for a vehicle motor according to the disclosure and a torque control method for a vehicle motor that is capable of being performed by the system are described in more detail, where FIG. 1 shows an implementation of how to solve a compensated torque of a motor in a flow block diagram. Broadly speaking, the torque control system for a vehicle motor according to the disclosure includes a target torque obtaining unit, a compensated torque calculation unit, and a theoretical torque calculation unit. The target torque obtaining unit is configured to obtain or call a target torque TRef of the motor that is determined by an intent of a driver or a vehicle pedal parameter (such as an accelerator pedal depth parameter or a brake pedal depth parameter), or the target torque obtaining unit itself is capable of calculating the target torque TRef of the motor. The compensated torque calculation unit is configured to calculate a compensated torque TDmp of the motor according to vehicle-related parameters, where the compensated torque of the motor is related to juddering of the vehicle or juddering of the motor at a rotational speed. The theoretical torque calculation unit is configured to calculate a theoretical torque TCmd of the motor based on the target torque TRef of the motor and the compensated torque TDmp of the motor. The operation of the motor or a subsequent operating state of the motor is controlled through the theoretical torque of the motor. In the theoretical torque calculation unit, the theoretical torque TCmd of the motor can be obtained simply by summing the target torque TRef of the motor and the compensated torque TDmp of the motor.

Herein, the compensated torque calculation unit is configured to calculate the compensated torque TDmp of the motor based on an actual angular velocity $\omega m$ of the motor, an actual angular velocity $\omega l$ of the wheel, and the target torque TRef of the motor. It should be noted herein that the actual angular velocity $\omega l$ of the wheel is an angular velocity that has been converted to a motor side. For example, a rotational speed (which may be in revolutions per minute) measured by a wheel speed sensor is converted into an angular velocity of the wheel, and the wheel angular velocity is divided by a transmission ratio of a transmission system of the electric vehicle to obtain the above actual angular velocity of the wheel that is converted to the motor side. The term "actual angular velocity $\omega l$ of the wheel" or "estimated angular velocity $\hat{\omega}_l$ of the wheel" proposed herein represents the angular velocity that is converted to the motor side based on the transmission ratio of the transmission system of the vehicle. Herein, considering that the actual angular velocity $\omega l$ of the wheel is susceptible to system parameter changes and working condition changes of the vehicle, a double closed-loop linear observer for solving the estimated angular velocity $\hat{\omega}_l$ of the wheel based on which the compensated torque may be calculated is introduced herein. Specifically, the compensated torque calculation unit includes an angular velocity acquisition module, a first delay module, a state observer, a second delay module, a deviation solving module, and a compensated torque calculation module.

The first delay module is configured to delay the target torque TRef of the motor, which depends on the intent of the driver, by $\triangle t3$, and a delayed target torque Te of the motor is transmitted to the subsequent double closed-loop linear observer, where the delay operation is mainly used to simulate a delay effect achieved by a current loop, and the delay time $\triangle t3$ depends on a pulse width modulation (PWM) switching frequency and parameter setting of the current loop. The time delay $\triangle t3$ may be, for example, 1 ms.

In addition, the angular velocity acquisition module is configured to acquire the actual angular velocity $\omega m$ of the motor at a first frequency and the actual angular velocity $\omega l$ of the wheel that is converted to the motor side at a second frequency, where the second frequency is less than the first frequency (as shown in FIG. 1, a sampling period for the first frequency is 1 ms, and a sampling period for the second frequency is 10 ms; in addition, for the sake of clarity, sampling periods are marked for the steps in FIG. 1). A difference between the two frequencies results from different data sources for the actual angular velocity of the motor and the actual angular velocity of the wheel, where the actual angular velocity of the motor may be generally called and initially processed from a motor sensor, while the actual angular velocity of the wheel generally needs to be transmitted by means of a vehicle CAN bus. Also considering the difference between the sampling frequencies and the common signal transmission lag, compared with common feedback regulation in the prior art, the disclosure provides for the second delay module between the state observer and the deviation solving module in a targeted manner, such that an estimated angular velocity $\hat{\omega}_m$ of the motor that is outputted by the state observer is kept synchronous with the acquired actual angular velocity $\omega m$ of the motor and the estimated angular velocity $\hat{\omega}_l$ of the wheel that is outputted by the state observer is kept synchronous with the acquired actual angular velocity $\omega l$ of the wheel. The double closed-loop linear observer makes calculations at the high first frequency. As shown in the figure, an estimated result is outputted per 1 ms, and the estimated angular velocity $\hat{\omega}_l$ of the wheel that is outputted every 1 ms is selected (for example, an output signal is selected every 10 ms) for subsequent calculations of a deviation between the estimated angular velocity of the wheel and the actual angular velocity $\omega l$ of the wheel. In addition, for a feedback signal circuit of the state observer, it should be noted that where the deviation ($\omega l - \hat{\omega}_l$) between the actual angular velocity $\omega l$ of the wheel and the estimated angular

velocity $\hat{\omega}_l$ of the wheel is fed back to the state observer every 10 ms, the state observer makes calculations based on the fed-back deviation within the time interval of 10 ms. Unlike this, when making calculations every 1 ms, the state observer makes calculations based on a deviation ($\omega m - \hat{\omega}_m$) between the actual angular velocity $\omega m$ of the motor and the estimated angular velocity $\hat{\omega}_m$ of the motor that is fed back every 1 ms. By delaying a signal for an actual angular velocity signal of the wheel that has a relatively long sampling period and changing a sampling frequency of the signal in a targeted manner, an update rate of motor torque control or compensated torque calculation (which can achieve an active damping control effect of preventing juddering) based on a wheel speed signal can be increased, for example, the update rate is increased from 10 ms in the past to 1 ms.

In an optional implementation, if the angular velocity acquisition module acquires the actual angular velocity $\omega l$ of the wheel from the vehicle CAN bus, the second delay module is designed in such a way that the second delay module includes a second wheel delay submodule configured to delay the estimated angular velocity $\hat{\omega}_l$ of the wheel to represent a delay time $\triangle t1$ of signal transmission lag of the CAN bus and to transmit the estimated angular velocity $\hat{\omega}_l$ of the wheel to the downstream deviation solving module at the second frequency. Herein, the delay time $\triangle t1$ depends on a communication period of the vehicle CAN bus, and may be set to several milliseconds, for example.

In another optional implementation, if the angular velocity acquisition module acquires the actual angular velocity $\omega m$ of the motor from the motor sensor, the second delay module is designed in such a way that the second delay module includes a second motor delay submodule configured to delay the estimated angular velocity $\hat{\omega}_m$ of the motor to represent a delay time $\triangle t2$ of transmission lag of the sensor and to transmit the estimated angular velocity $\hat{\omega}_m$ of the motor to the downstream deviation solving module at the first frequency. Herein, the delay time $\triangle t2$ depends on a sensor signal analysis process for the actual angular velocity $\omega m$ of the motor and a filtering process of related hardware, and may be set to several milliseconds, for example.

Next, the state observer in the form of the double closed-loop linear observer is described in detail. A state-space equation for the state observer is constructed as:

$$\begin{cases} \dot{\hat{x}} = A\hat{x} + Bu + L(y - \hat{y}) \\ \hat{y} = C\hat{x} \end{cases},$$

where $\hat{x}$ is a real-time state variable matrix, and $\hat{x} = \begin{bmatrix} \hat{\omega}_m \\ \hat{\omega}_l \\ \hat{\theta}_m - \hat{\theta}_l \\ \hat{T}_l \end{bmatrix}$ in which $\hat{\theta}_m$ is an estimated angle of a motor

rotor, $\hat{\theta}_l$ is an estimated angle of a loaded rotor, and $\hat{T}_l$ is an estimated torque of a load;

y is an actually measured output variable matrix, and $y = \begin{bmatrix} \omega_m \\ \omega_l \end{bmatrix}$;

$\hat{y}$ is an output variable matrix, and $\hat{y} = \begin{bmatrix} \hat{\omega}_m \\ \hat{\omega}_l \end{bmatrix}$;

C depends on a controlled quantity of the state observer;

A, B, and u are system structural parameters, which are respectively as follows:

$$A = \begin{bmatrix} -\dfrac{c}{J_m} & \dfrac{c}{J_m} & -\dfrac{K}{J_m} & 0 \\ \dfrac{c}{J_l} & -\dfrac{c}{J_l} & \dfrac{K}{J_l} & -\dfrac{1}{J_l} \\ 1 & -1 & 0 & 0 \\ 0 & 0 & 0 & 0 \end{bmatrix}, \quad B = \begin{bmatrix} \dfrac{1}{J_m} \\ 0 \\ 0 \\ 0 \end{bmatrix}, \quad u = [T_e]$$

,

where c is a damping coefficient of a transmission shaft of an electric vehicle, K is stiffness of the transmission shaft of the electric vehicle, Jm is a rotational inertia of the motor, Jl is a rotational inertia of the load, and Te is the delayed target torque of the motor; and

$$L = \begin{bmatrix} L_{11} & L_{12} \\ L_{21} & L_{22} \\ L_{31} & L_{32} \\ L_{41} & L_{42} \end{bmatrix}$$

L is a feedback compensation matrix of 4 * 2, , and is set depending on poles of a characteristic equation for the state observer. The characteristic equation is represented by $f(s) = |sI-(A-LC)|$, where an appropriate matrix L is first selected to make a matrix A-LC stable, i.e., 8 parameters of the matrix L are calculated by configuring the poles of the above characteristic equation (here, configuring the poles in such a way that all the poles are located in a left half plane of a plane s).

Based on the above state-space equation, the estimated angular velocity $\hat{\omega}_m$ of the motor, the estimated angular velocity $\hat{\omega}_l$ of the wheel, an angle difference $(\hat{\theta}_m - \hat{\theta}_l)$, and the estimated torque $\hat{T}_l$ of the load may be obtained, which are respectively as follows:

$$\hat{\omega}_m = \int \frac{1}{J_m} \left[ -c(\hat{\omega}_m - \hat{\omega}_l) - K(\hat{\theta}_m - \hat{\theta}_l) + T_e + J_m L_{11}(\omega_m - \hat{\omega}_m) + J_m L_{12}(\omega_l - \hat{\omega}_l) \right]$$

,

$$\hat{\omega}_l = \int \frac{1}{J_l} \left[ c(\hat{\omega}_m - \hat{\omega}_l) + K(\hat{\theta}_m - \hat{\theta}_l) - \hat{T}_l + J_l L_{21}(\omega_m - \hat{\omega}_m) + J_l L_{22}(\omega_l - \hat{\omega}_l) \right]$$

,

$$\hat{\theta}_m - \hat{\theta}_l = \int \left[ \hat{\omega}_m - \hat{\omega}_l + L_{31}(\omega_m - \hat{\omega}_m) + L_{32}(\omega_l - \hat{\omega}_l) \right]$$

,

and

$$\hat{T}_l = \int \left[ L_{41}(\omega_m - \hat{\omega}_m) + L_{42}(\omega_l - \hat{\omega}_l) \right]$$

.

In an optional implementation, the compensated torque TDmp of the motor that is used to correct the target torque TRef of the motor is calculated based on the actual angular velocity ωm of the motor and the estimated angular velocity $\hat{\omega}_l$ of the wheel that is obtained by the double closed-loop linear observer, and the target torque TRef of the motor and the compensated torque TDmp of the motor are summed to obtain the theoretical torque TCmd of the motor. Specifically, as shown in a lower half part of FIG. 1, calculations are made according to the following formula:

$$T_{Dmp} = -K_p(\omega_m - \hat{\omega}_l)$$

,

where Kp is a dimensionless control coefficient. Herein, instead of using a directly acquired actual angular velocity signal of the wheel, an estimated angular velocity signal of the wheel based on the state observer is used, which is smoother due to being not affected by external factors, and has a short, especially a shorter delay than in the case of using a filter. Furthermore, this also makes it possible that the wheel angular velocity signal may be used throughout the process to extract juddering of the motor at a rotational speed, such that better extraction of juddering features can still be implemented at a zero crossing point of the motor torque.

In summary, the compensated torque of the motor is calculated based on the actual angular velocity of the motor and the estimated angular velocity signal of the wheel that is calculated by means of the double closed-loop linear observer, such that the torque control system for a vehicle motor can be prevented from being affected by the system parameter changes and the working condition changes of the vehicle. Furthermore, the output signal from the state observer is delayed such that a relatively smooth compensated torque of the motor can be obtained, and the real-time performance of the compensated torque of the motor can thus be improved. According to an implementation of the disclosure, the estimated angular velocity of the motor is delayed in a targeted manner, such that a lag characteristic of signal transmission of the sensor in the electric vehicle can be simulated. According to another implementation of the disclosure, the estimated angular velocity of the wheel is delayed in a targeted manner, such that a lag characteristic of signal transmission of the vehicle CAN bus can be simulated. According to another implementation of the disclosure, a relevant delay processing module is provided such that a high update rate of the compensated torque of the motor can be achieved even in the case of using a wheel-relevant signal with a low sampling frequency.

According to a second aspect of the disclosure, there is also proposed a torque control method for a vehicle motor, which method is capable of being performed by the torque control system for a vehicle motor that has the above features and advantages. The method includes the following steps:

an obtaining step: obtaining a target torque TRef of the motor, an actual angular velocity $\omega m$ of the motor, and an actual angular velocity $\omega l$ of a wheel, which step may be performed by a target torque obtaining unit and a rotating acquisition module of a compensated torque calculation unit of the torque control system for a vehicle motor;

a calculation step: calculating a compensated torque TDmp of the motor based on the target torque TRef of the motor, the actual angular velocity $\omega m$ of the motor, and the actual angular velocity $\omega l$ of the wheel, which step may be performed, on the whole, by the compensated torque calculation unit of the torque control system for a vehicle motor; and

a correction step: calculating a theoretical torque TCmd of the motor based on the target torque TRef of the motor and the compensated torque TDmp of the motor, which step may be performed by a theoretical torque calculation unit of the torque control system for a vehicle motor,

where the calculation step includes the following steps:

an estimated value obtaining step: calculating an estimated angular velocity $\hat{\omega}_m$ of the motor and an estimated angular velocity $\hat{\omega}_l$ of the wheel by means of a double closed-loop linear observer, where the estimated angular velocity $\hat{\omega}_m$ of the motor and the estimated angular velocity $\hat{\omega}_l$ of the wheel that are outputted by a state observer are delayed to make same respectively synchronous with the acquired actual angular velocity $\omega m$ of the motor and the acquired actual angular velocity $\omega l$ of the wheel (which may be performed by a second delay module of the torque control system for a vehicle motor), and calculating a deviation between the estimated angular velocity $\hat{\omega}_m$ of the motor and the actual angular velocity $\omega m$ of the motor and a deviation between the estimated angular velocity $\hat{\omega}_l$ of the wheel and the actual angular velocity $\omega l$ of the wheel (which may be performed by a deviation finding module), where the deviations are fed back to the state observer; and

a compensated torque calculation step: calculating the compensated torque TDmp of the motor based on the acquired actual angular velocity $\omega m$ of the motor and the solved estimated angular velocity $\hat{\omega}_l$ of the wheel, which step may be performed by a compensated torque calculation module of the torque control system for a vehicle motor.

In an optional implementation, in the obtaining step, the actual angular velocity $\omega m$ of the motor is acquired from a motor sensor, and in the estimated value obtaining step, the estimated angular velocity $\hat{\omega}_m$ of the motor is delayed to represent a delay time $\triangle t2$ of transmission lag of the sensor, and the delayed estimated angular velocity $\hat{\omega}_m$ of the motor is outputted at a first frequency, which steps may be performed by a second motor delay submodule of the torque control system for a vehicle motor.

In another optional implementation, in the obtaining step, the actual angular velocity $\omega l$ of the wheel is acquired from a vehicle CAN bus, and in the estimated value obtaining step, the estimated angular velocity $\hat{\omega}_l$ of the wheel is delayed to represent a delay time $\triangle t1$ of signal transmission lag of the CAN bus, and the delayed estimated angular velocity $\hat{\omega}_l$ of the wheel is outputted at a second frequency for solving of the deviations, which steps may be performed by a second wheel delay submodule of the torque control system for a vehicle motor.

It should be noted herein that the torque control method for a vehicle motor according to the disclosure may have the advantages and characteristics described above in terms of the torque control system for a vehicle motor, and for the method, reference may be correspondingly made to the description of the system and FIG. 1, which will not be repeated.

According to a third aspect of the disclosure, there is also proposed a computer-readable storage medium having a computer program stored thereon, where when the computer program is executed by a processor, a torque control method for a vehicle motor of an electric vehicle according to one or more embodiments of the disclosure is implemented. The computer-readable storage medium mentioned herein includes various types of computer storage media, and may be any usable medium accessible to a general-purpose or special-purpose computer. For example, the computer-readable storage medium may include a random access memory (RAM), a read-only memory (ROM), an erasable programmable read-only memory (EPROM), an electrically erasable programmable read-only memory (EEPROM), a register, a hard disk, a removable hard disk, a compact disc read-only memory (CD-ROM) or another optical disc memory, a magnetic disk memory or another magnetic storage device, or any other transitory or non-transitory media that can carry or store expected program code units having instruction or data structure forms and be accessible to the general-purpose or special-purpose computer or a general-purpose or special-purpose processor. For the computer-readable storage medium according to the disclosure, reference may be made to the explanations of the torque control method or system for a vehicle motor according to the disclosure, which will not be repeated.

According to a fourth aspect of the disclosure, there is also proposed a vehicle, the vehicle including the above torque control system for a vehicle motor and being capable of having the advantages and characteristics described above in terms of the torque control method or system for a vehicle motor, which will not be repeated.

## Claims

1. A torque control system for a vehicle motor, comprising the following modules:

    a target torque obtaining unit configured to obtain a target torque ($T_{Ref}$) of the motor that is associated with a vehicle pedal parameter;
    a compensated torque calculation unit configured to calculate a compensated torque ($T_{Dmp}$) of the motor; and
    a theoretical torque calculation unit configured to calculate a theoretical torque ($T_{Cmd}$) of the motor based on the target torque ($T_{Ref}$) of the motor and the compensated torque ($T_{Dmp}$) of the motor,
    the compensated torque calculation unit comprising an angular velocity acquisition module, a first delay module, a state observer, a second delay module, a deviation solving module, and a compensated torque calculation module, wherein
    the angular velocity acquisition module is configured to obtain an actual angular velocity ($\omega_m$) of the motor that is sampled at a first frequency and an actual angular velocity ($\omega_l$) of a wheel that is sampled at a second frequency less than the first frequency and converted to a motor side;
    the first delay module is configured to delay the target torque ($T_{Ref}$) of the motor and transmit a delayed target torque ($T_e$) of the motor to the state observer;
    the state observer is constructed as a double closed-loop linear observer and configured to obtain an estimated angular velocity ($\hat{\omega}_m$) of the motor and an estimated angular velocity ($\hat{\omega}_l$) of the wheel at the first frequency;
    the second delay module is configured to: delay the estimated angular velocity ($\hat{\omega}_m$) of the motor and the estimated angular velocity ($\hat{\omega}_l$) of the wheel that are outputted by the state observer to make same respectively synchronous with the acquired actual angular velocity ($\omega_m$) of the motor and the acquired actual angular velocity ($\omega_l$) of the wheel; and calculate a deviation between the estimated angular velocity ($\hat{\omega}_m$) of the motor and the actual angular velocity ($\omega_m$) of the motor and a deviation between the estimated angular velocity ($\hat{\omega}_l$) of the wheel and the actual angular velocity ($\omega_l$) of the wheel, wherein the deviations are fed back to the state observer; and
    the compensated torque calculation module is configured to calculate the compensated torque ($T_{Dmp}$) of the motor based on the received actual angular velocity ($\omega_m$) of the motor and the received estimated angular velocity ($\hat{\omega}_l$) of the wheel.

2. The torque control system for a vehicle motor according to claim 1, wherein the angular velocity acquisition module acquires the actual angular velocity ($\omega_l$) of the wheel by a vehicle controller area network (CAN) bus, and correspondingly, the second delay module comprises a second wheel delay submodule configured to delay the estimated angular velocity ($\hat{\omega}_l$) of the wheel to represent a delay time ($\triangle t_1$) of signal transmission lag of the CAN bus and to transmit the estimated angular velocity ($\hat{\omega}_l$) of the wheel to the deviation finding module at the second frequency.

3. The torque control system for a vehicle motor according to claim 1, wherein the angular velocity acquisition module acquires the actual angular velocity ($\omega_m$) of the motor from a motor sensor, and correspondingly, the second delay module comprises a second motor delay submodule configured to delay the estimated angular velocity ($\hat{\omega}_m$) of the motor to represent a delay time ($\triangle t_2$) of transmission lag of the sensor and to transmit the estimated angular velocity ($\hat{\omega}_m$) of the motor to the deviation solving module at the first frequency.

4. The torque control system for a vehicle motor according to claim 1, wherein a state-space equation for the state observer is constructed as:

$$\begin{cases} \dot{\hat{x}} = A\hat{x} + Bu + L(y - \hat{y}) \\ \hat{y} = C\hat{x} \end{cases},$$

wherein $\hat{x}$ is a real-time state variable matrix, and $\hat{x} = \begin{bmatrix} \widehat{\omega}_m \\ \widehat{\omega}_l \\ \hat{\theta}_m - \hat{\theta}_l \\ \widehat{T}_l \end{bmatrix}$ in which $\hat{\theta}_m$ is an estimated angle of a

motor rotor, $\hat{\theta}_l$ is an estimated angle of a loaded rotor, and $\widehat{T}_l$ is an estimated torque of a load;

$y$ is an actually measured output variable matrix, and $y = \begin{bmatrix} \omega_m \\ \omega_l \end{bmatrix}$;

$\hat{y}$ is an output variable matrix, and $\hat{y} = \begin{bmatrix} \widehat{\omega}_m \\ \widehat{\omega}_l \end{bmatrix}$;

$C$ depends on a controlled quantity of the state observer;

$L$ is a feedback compensation matrix of 4 * 2 and is set depending on poles of a characteristic equation for the state observer;

$A, B,$ and $u$ are system structural parameters, which are respectively as follows:

$$A = \begin{bmatrix} -\dfrac{c}{J_m} & \dfrac{c}{J_m} & -\dfrac{K}{J_m} & 0 \\ \dfrac{c}{J_l} & -\dfrac{c}{J_l} & \dfrac{K}{J_l} & -\dfrac{1}{J_l} \\ 1 & -1 & 0 & 0 \\ 0 & 0 & 0 & 0 \end{bmatrix}, \quad B = \begin{bmatrix} \dfrac{1}{J_m} \\ 0 \\ 0 \\ 0 \end{bmatrix}, \quad u = [T_e]$$

wherein c is a damping coefficient of a transmission shaft of an electric vehicle, $K$ is stiffness of the transmission shaft of the electric vehicle, $J_m$ is a rotational inertia of the motor, $J_l$ is a rotational inertia of the load, and $T_e$ is the delayed target torque of the motor.

5. The torque control system for a vehicle motor according to any one of claims 1 to 4, wherein the compensated torque calculation module is configured to calculate the compensated torque ($T_{Dmp}$) of the motor based on the following formula:

$$T_{Dmp} = -K_p(\omega_m - \widehat{\omega}_l),$$

wherein $K_p$ is a dimensionless control coefficient.

6. A torque control method for a vehicle motor, which method is capable of being performed by a torque control system for a vehicle motor according to any one of claims 1 to 5, the method comprising the following steps:

an obtaining step: obtaining a target torque ($T_{Ref}$) of the motor, an actual angular velocity ($\omega_m$) of the motor, and an actual angular velocity ($\omega_l$) of a wheel;
a calculation step: calculating a compensated torque ($T_{Dmp}$) of the motor based on the target torque ($T_{Ref}$) of the motor, the actual angular velocity ($\omega_m$) of the motor, and the actual angular velocity ($\omega_l$) of the wheel; and

a correction step: calculating a theoretical torque ($T_{Cmd}$) of the motor based on the target torque ($T_{Ref}$) of the motor and the compensated torque ($T_{Dmp}$) of the motor,
wherein the calculation step comprises the following steps:

an estimated value obtaining step: calculating an estimated angular velocity ($\hat{\omega}_m$) of the motor and an estimated angular velocity ($\hat{\omega}_l$) of the wheel by means of a double closed-loop linear observer, wherein the estimated angular velocity ($\hat{\omega}_m$) of the motor and the estimated angular velocity ($\hat{\omega}_l$) of the wheel that are outputted by a state observer are delayed to make same respectively synchronous with the acquired actual angular velocity ($\omega_m$) of the motor and the acquired actual angular velocity ($\omega_l$) of the wheel, and calculating a deviation between the estimated angular velocity ($\hat{\omega}_m$) of the motor and the actual angular velocity ($\omega_m$) of the motor and a deviation between the estimated angular velocity ($\hat{\omega}_l$) of the wheel and the actual angular velocity ($\omega_l$) of the wheel, wherein the deviations are fed back to the state observer; and
a compensated torque calculation step: calculating the compensated torque ($T_{Dmp}$) of the motor based on the acquired actual angular velocity ($\omega_m$) of the motor and the solved estimated angular velocity ($\hat{\omega}_l$) of the wheel.

7. The torque control method for a vehicle motor according to claim 6, wherein in the obtaining step, the actual angular velocity ($\omega_l$) of the wheel is acquired from a vehicle CAN bus, and
correspondingly, in the estimated value obtaining step, the estimated angular velocity ($\hat{\omega}_l$) of the wheel is delayed to represent a delay time ($\triangle t_1$) of signal transmission lag of the CAN bus, and the delayed estimated angular velocity ($\hat{\omega}_l$) of the wheel is outputted at a second frequency for solving of the deviations.

8. The torque control method for a vehicle motor according to claim 7, wherein in the obtaining step, the actual angular velocity ($\omega_m$) of the motor is acquired from a motor sensor, and
correspondingly, in the estimated value obtaining step, the estimated angular velocity ($\hat{\omega}_m$) of the motor is delayed to represent a delay time ($\triangle t_2$) of transmission lag of the sensor, and the delayed estimated angular velocity ($\hat{\omega}_m$) of the motor is outputted at a first frequency for solving of the deviations.

9. A computer-readable storage medium having a computer program stored thereon, wherein when the computer program is executed by a processor, a torque control method for a vehicle motor according to any one of claims 6 to 8 is implemented.

10. A vehicle, comprising a torque control system for a vehicle motor according to any one of claims 1 to 5.

## Patentansprüche

1. Drehmomentsteuersystem für einen Fahrzeugmotor, umfassend die folgenden Module:

eine Solldrehmomenterhalteeinheit, ausgelegt zum Erhalten eines Solldrehmoments ($T_{Ref}$) des Motors, das mit einem Fahrzeugpedalparameter verknüpft ist;
eine Kompensiertes-Drehmoment-Berechnungseinheit, ausgelegt zum Berechnen eines kompensierten Drehmoments ($T_{Dmp}$) des Motors; und
eine Theoretisches-Drehmoment-Berechnungseinheit, ausgelegt zum Berechnen eines theoretischen Drehmoments ($T_{Cmd}$) des Motors basierend auf dem Solldrehmoment ($T_{Ref}$) des Motors und dem kompensierten Drehmoment ($T_{Dmp}$) des Motors,
wobei die Kompensiertes-Drehmoment-Berechnungseinheit ein Winkelgeschwindigkeit-Erfassungsmodul, ein erstes Verzögerungsmodul, einen Zustandsbeobachter, ein zweites Verzögerungsmodul, ein Abweichungslösungsmodul und ein Kompensiertes-Drehmoment-Berechnungsmodul umfasst, wobei das Winkelgeschwindigkeits-Erfassungsmodul ausgelegt ist zum Erhalten einer tatsächlichen Winkelgeschwindigkeit ($\omega_m$) des Motors, die bei einer ersten Frequenz abgetastet wird, und einer tatsächlichen Winkelgeschwindigkeit ($\omega_l$) eines Rades, die bei einer zweiten Frequenz abgetastet wird, die kleiner als die erste Frequenz ist, und auf eine Motorseite umgewandelt wird;
das erste Verzögerungsmodul ausgelegt ist zum Verzögern des Solldrehmoments ($T_{Ref}$) des Motors und Senden eines verzögerten Solldrehmoments ($T_e$) des Motors an den Zustandsbeobachter;
der Zustandsbeobachter als ein doppelter linearer Beobachter mit geschlossener Regelung aufgebaut ist und ausgelegt ist zum Erhalten einer geschätzten Winkelgeschwindigkeit ($\hat{\omega}_m$) des Motors und einer geschätzten Winkelgeschwindigkeit ($\hat{\omega}_l$) des Rades bei der ersten Frequenz;
das zweite Verzögerungsmodul ausgelegt ist zum: Verzögern der geschätzten Winkelgeschwindigkeit ($\hat{\omega}_m$) des

Motors und der geschätzten Winkelgeschwindigkeit ($\hat{\omega}_l$) des Rades, die durch den Zustandsbeobachter ausgegeben werden, um selbige entsprechend mit der erfassten tatsächlichen Winkelgeschwindigkeit ($\omega_m$) des Motors und der erfassten tatsächlichen Winkelgeschwindigkeit ($\omega_l$) des Rades zu synchronisieren; und Berechnen einer Abweichung zwischen der geschätzten Winkelgeschwindigkeit ($\hat{\omega}_m$) des Motors und der tatsächlichen Winkelgeschwindigkeit ($\omega_m$) des Motors und einer Abweichung zwischen der geschätzten Winkelgeschwindigkeit ($\hat{\omega}_l$) des Rades und der tatsächlichen Winkelgeschwindigkeit ($\omega_l$) des Rades, wobei die Abweichungen in den Zustandsbeobachter zurückgespeist werden; und
das Kompensiertes-Drehmoment-Berechnungsmodul ausgelegt ist zum Berechnen des kompensierten Drehmoments ($T_{Dmp}$) des Motors basierend auf der empfangenen tatsächlichen Winkelgeschwindigkeit ($\omega_m$) des Motors und der empfangenen geschätzten Winkelgeschwindigkeit ($\hat{\omega}_l$) des Rades.

2. Drehmomentsteuersystem für einen Fahrzeugmotor nach Anspruch 1, wobei das Winkelgeschwindigkeitserfassungsmodul die tatsächliche Winkelgeschwindigkeit ($\omega_l$) des Rades durch einen Fahrzeug-CAN-Bus (Controller Area Network) erfasst, und
wobei, entsprechend, das zweite Verzögerungsmodul ein zweites Radverzögerungsuntermodul umfasst, das ausgelegt ist zum Verzögern der geschätzten Winkelgeschwindigkeit ($\hat{\omega}_l$) des Rades, um eine Verzögerungszeit ($\Delta t_1$) von Signalübertragungsverzögerung des CAN-Busses zu repräsentieren und die geschätzte Winkelgeschwindigkeit ($\hat{\omega}_l$) des Rades an das Abweichungssuchmodul bei der zweiten Frequenz zu senden.

3. Drehmomentsteuersystem für einen Fahrzeugmotor nach Anspruch 1, wobei das Winkelgeschwindigkeitserfassungsmodul die tatsächliche Winkelgeschwindigkeit ($\omega_m$) des Motors von einem Motorsensor erfasst, und
wobei, entsprechend, das zweite Verzögerungsmodul ein zweites Motorverzögerungsuntermodul umfasst, das ausgelegt ist zum Verzögern der geschätzten Winkelgeschwindigkeit ($\hat{\omega}_m$) des Motors, um eine Verzögerungszeit ($\triangle t_2$) von Signalübertragungsverzögerung des Sensors zu repräsentieren und die geschätzte Winkelgeschwindigkeit ($\hat{\omega}_m$) des Motors an das Abweichungslösungsmodul bei der ersten Frequenz zu senden.

4. Drehmomentsteuersystem für ein Fahrzeug nach Anspruch 1, wobei eine Zustand-Raum-Gleichung für den Zustandsbeobachter konstruiert wird als:

$$\begin{cases} \dot{\hat{x}} = A\hat{x} + Bu + L(y - \hat{y}) \\ \hat{y} = C\hat{x} \end{cases}$$

wobei $\hat{x}$ eine Echtzeit-Zustandsvariablenmatrix ist und $\hat{x} = \begin{bmatrix} \widehat{\omega}_m \\ \widehat{\omega}_l \\ \hat{\theta}_m - \hat{\theta}_l \\ \hat{T}_l \end{bmatrix}$ , wobei $\hat{\theta}_m$ ein geschätzter Winkel

eines Motor-Rotors ist, $\hat{\theta}_l$ ein geschätzter Winkel eines belasteten Rotors ist und $\hat{T}_l$ ein geschätztes Drehmoment einer Last ist;

$y$ eine Matrix mit tatsächlich gemessenen Ausgangsvariablen ist und $y = \begin{bmatrix} \omega_m \\ \omega_l \end{bmatrix}$ ;

$\hat{y}$ eine Ausgangsvariablenmatrix ist und $\hat{y} = \begin{bmatrix} \widehat{\omega}_m \\ \widehat{\omega}_l \end{bmatrix}$ ;

$C$ von einer gesteuerten Quantität des Zustandsbeobachters abhängt;
$L$ eine Rückkopplungskompensationsmatrix von 4 * 2 ist und in Abhängigkeit von den Polen einer charakteristischen Gleichung für den Zustandsbeobachter festgelegt wird;
$A$, $B$ und $u$ strukturelle Systemparameter sind, die entsprechend wie folgt sind:

$$A = \begin{bmatrix} -\dfrac{c}{J_m} & \dfrac{c}{J_m} & -\dfrac{K}{J_m} & 0 \\ \dfrac{c}{J_l} & -\dfrac{c}{J_l} & \dfrac{K}{J_l} & -\dfrac{1}{J_l} \\ 1 & -1 & 0 & 0 \\ 0 & 0 & 0 & 0 \end{bmatrix}, B = \begin{bmatrix} \dfrac{1}{J_m} \\ 0 \\ 0 \\ 0 \end{bmatrix}, u = [T_e];$$

wobei *c* ein Dämpfungskoeffizient einer Übertragungswelle eines Elektrofahrzeugs ist, *K* eine Steifigkeit der Übertragungswelle des Elektrofahrzeugs ist, $J_m$ eine Rotationsträgheit des Motors ist, $J_l$ eine Rotationsträgheit der Last ist und $T_e$ das verzögerte Solldrehmoment des Motors ist.

**5.** Drehmomentsteuersystem für ein Fahrzeug nach einem der Ansprüche 1 bis 4, wobei das Kompensiertes-Drehmoment-Berechnungsmodul ausgelegt ist zum Berechnen des kompensierten Drehmoments ($T_{Dmp}$) des Motors basierend auf der folgenden Formel:

$$T_{Dmp} = -K_p(\omega_m - \widehat{\omega}_l),$$

wobei $K_p$ ein dimensionsloser Steuerungskoeffizient ist.

**6.** Drehmomentsteuerverfahren für einen Fahrzeugmotor, wobei das Verfahren durch ein Drehmomentsteuersystem für einen Fahrzeugmotor nach einem der Ansprüche 1 bis 5 durchgeführt werden kann, wobei das Verfahren die folgenden Schritte umfasst:

einen Erhalteschritt: Erhalten eines Solldrehmoments ($T_{Ref}$) des Motors, einer tatsächlichen Winkelgeschwindigkeit ($\omega_m$) des Motors und einer tatsächlichen Winkelgeschwindigkeit ($\omega_l$) eines Rades;
einen Berechnungsschritt: Berechnen eines kompensierten Drehmoments ($T_{Dmp}$) des Motors basierend auf dem Solldrehmoment ($T_{Ref}$) des Motors, der tatsächlichen Winkelgeschwindigkeit ($\omega_m$) des Motors und der tatsächlichen Winkelgeschwindigkeit ($\omega_l$) des Rades; und
einen Korrekturschritt: Berechnen eines theoretischen Drehmoments ($T_{Cmd}$) des Motors basierend auf dem Solldrehmoment ($T_{Ref}$) des Motors und dem kompensierten Drehmoment ($T_{Dmp}$) des Motors,
wobei der Berechnungsschritt die folgenden Schritte umfasst:
einen Schritt zum Erhalten eines geschätzten Wertes:

Berechnen einer geschätzten Winkelgeschwindigkeit ($\hat{\omega}_m$) des Motors und einer geschätzten Winkelgeschwindigkeit ($\hat{\omega}_l$) des Rades mittels eines doppelten linearen Beobachters mit geschlossener Regelung, wobei die geschätzte Winkelgeschwindigkeit ($\hat{\omega}_m$) des Motors und die geschätzte Winkelgeschwindigkeit ($\hat{\omega}_l$) des Rades, die durch einen Zustandsbeobachter ausgegeben werden, verzögert werden, um selbige entsprechend mit der erfassten tatsächlichen Winkelgeschwindigkeit ($\omega_m$) des Motors und der erfassten tatsächlichen Winkelgeschwindigkeit ($\omega_l$) des Rades zu synchronisieren, und Berechnen einer Abweichung zwischen der geschätzten Winkelgeschwindigkeit ($\hat{\omega}_m$) des Motors und der tatsächlichen Winkelgeschwindigkeit ($\omega_m$) des Motors und einer Abweichung zwischen der geschätzten Winkelgeschwindigkeit ($\hat{\omega}_l$) des Rades und der tatsächlichen Winkelgeschwindigkeit ($\omega_l$) des Rades, wobei die Abweichungen zum Zustandsbeobachter zurückgespeist werden; und
einen Schritt zur Berechnung eines kompensierten Drehmoments: Berechnen des kompensierten Drehmoments ($T_{Dmp}$) des Motors basierend auf der erfassten tatsächlichen Winkelgeschwindigkeit ($\omega_m$) des Motors und der gelösten geschätzten Winkelgeschwindigkeit ($\hat{\omega}_l$) des Rades.

**7.** Drehmomentsteuerverfahren für einen Fahrzeugmotor nach Anspruch 6, wobei, im Erhalteschritt, die tatsächliche Winkelgeschwindigkeit ($\omega_l$) des Rades von einem Fahrzeug-CAN-Bus erfasst wird, und
wobei entsprechend, im Schritt zum Erhalten eines geschätzten Wertes, die geschätzte Winkelgeschwindigkeit ($\hat{\omega}_l$) des Rades verzögert wird, um eine Verzögerungszeit ($\Delta t_1$) von Signalübertragungsverzögerung des CAN-Busses zu repräsentieren, und wobei die verzögerte geschätzte Winkelgeschwindigkeit ($\hat{\omega}_l$) des Rades bei einer zweiten Frequenz ausgegeben wird, um die Abweichungen zu lösen.

**8.** Drehmomentsteuerverfahren für einen Fahrzeugmotor nach Anspruch 7, wobei, im Erhalteschritt, die tatsächliche Winkelgeschwindigkeit ($\omega_m$) des Motors von einem Motorsensor erfasst wird, und
wobei entsprechend, im Schritt zum Erhalten eines geschätzten Wertes, die geschätzte Winkelgeschwindigkeit ($\hat{\omega}_m$) des Motors verzögert wird, um eine Verzögerungszeit ($\Delta t_2$) von Übertragungsverzögerung des Sensors zu repräsentieren, und wobei die verzögerte geschätzte Winkelgeschwindigkeit ($\hat{\omega}_m$) des Motors bei einer ersten Frequenz ausgegeben wird, um die Abweichungen zu lösen.

**9.** Computerlesbares Speichermedium mit einem darauf gespeicherten Computerprogramm, wobei, wenn das Computerprogramm durch einen Prozessor ausgeführt wird, ein Drehmomentsteuerverfahren für einen Fahrzeugmotor nach einem der Ansprüche 6 bis 8 umgesetzt wird.

**10.** Fahrzeug, umfassend ein Drehmomentsteuersystem für einen Fahrzeugmotor nach einem der Ansprüche 1 bis 5.

**Revendications**

**1.** Système de commande de couple pour un moteur de véhicule, comprenant les modules suivants :

une unité d'obtention de couple cible configurée pour obtenir un couple cible ($T_{Ref}$) du moteur qui est associé à un paramètre de pédale de véhicule ;
une unité de calcul de couple compensé configurée pour calculer un couple compensé ($T_{Dmp}$) du moteur ; et
une unité de calcul de couple théorique configurée pour calculer un couple théorique ($T_{Cmd}$) du moteur sur la base du couple cible ($T_{Ref}$) du moteur et du couple compensé ($T_{Dmp}$) du moteur,
l'unité de calcul de couple compensé comprenant un module d'acquisition de vitesse angulaire, un premier module de retard, un observateur d'état, un deuxième module de retard, un module de résolution d'écart, et un module de calcul de couple compensé, dans lequel
le module d'acquisition de vitesse angulaire est configuré pour obtenir une vitesse angulaire réelle ($\omega_m$) du moteur qui est échantillonnée à une première fréquence et une vitesse angulaire réelle ($\omega_l$) d'une roue qui est échantillonnée à une deuxième fréquence inférieure à la première fréquence et convertie en un côté moteur ;
le premier module de retard est configuré pour retarder le couple cible ($T_{Ref}$) du moteur et transmettre un couple cible retardé ($T_e$) du moteur à l'observateur d'état ;
l'observateur d'état est construit sous la forme d'un observateur linéaire à double boucle fermée et configuré pour obtenir une vitesse angulaire estimée ($\hat{\omega}_m$) du moteur et une vitesse angulaire estimée ($\hat{\omega}_l$) de la roue à la première fréquence ;
le deuxième module de retard est configuré pour : retarder la vitesse angulaire estimée ($\hat{\omega}_m$) du moteur et la vitesse angulaire estimée ($\hat{\omega}_l$) de la roue qui sont produites par l'observateur d'état pour les rendre respectivement synchrones avec la vitesse angulaire réelle acquise ($\omega_m$) du moteur et la vitesse angulaire réelle acquise ($\hat{\omega}_l$) de la roue ; et calculer un écart entre la vitesse angulaire estimée ($\hat{\omega}_m$) du moteur et la vitesse angulaire réelle ($\omega_m$) du moteur et un écart entre la vitesse angulaire estimée ($\hat{\omega}_l$) de la roue et la vitesse angulaire réelle ($\hat{\omega}_l$) de la roue, dans lequel les écarts sont retournés à l'observateur d'état ; et
le module de calcul de couple compensé est configuré pour calculer le couple compensé ($T_{Dmp}$) du moteur sur la base de la vitesse angulaire réelle reçue ($\omega_m$) du moteur et de la vitesse angulaire estimée reçue ($\hat{\omega}_l$) de la roue.

**2.** Système de commande de couple pour un moteur de véhicule selon la revendication 1, dans lequel le module d'acquisition de vitesse angulaire acquiert la vitesse angulaire réelle ($\omega_l$) de la roue par un bus de réseau de zone de commande (CAN) de véhicule, et
de manière correspondante, le deuxième module de retard comprend un deuxième sous-module de retard de roue configuré pour retarder la vitesse angulaire estimée ($\hat{\omega}_l$) de la roue pour représenter un temps de retard ($\Delta_{t1}$) de délai de transmission de signal du bus CAN et pour transmettre la vitesse angulaire estimée ($\hat{\omega}_l$) de la roue au module de recherche d'écart à la deuxième fréquence.

**3.** Système de commande de couple pour un moteur de véhicule selon la revendication 1, dans lequel le module d'acquisition de vitesse angulaire acquiert la vitesse angulaire réelle ($\omega_m$) du moteur en provenance d'un capteur de moteur, et
de manière correspondante, le deuxième module de retard comprend un deuxième sous-module de retard de moteur configuré pour retarder la vitesse angulaire estimée ($\hat{\omega}_l$) du moteur pour représenter un temps de retard ($\Delta_{t2}$) de délai de transmission du capteur et pour transmettre la vitesse angulaire estimée ($\hat{\omega}_m$) du moteur au module de résolution d'écart à la première fréquence.

**4.** Système de commande de couple pour un moteur de véhicule selon la revendication 1, dans lequel une équation d'espace d'état pour l'observateur d'état est construite comme : $\begin{cases} \dot{\hat{x}} = A\hat{x} + Bu + L(y - \hat{y}) \\ \hat{y} = C\hat{x} \end{cases}$ ,

dans laquelle $\hat{x}$ est une matrice variable d'état en temps réel, et $x = \begin{bmatrix} \hat{\omega}_m \\ \hat{\omega}_l \\ \theta_m - \theta_l \\ \hat{T}_l \end{bmatrix}$ , dans laquelle $\hat{\theta}_m$ est un angle

estimé d'un rotor de moteur, $\hat{\theta}_l$ est un angle estimé d'un rotor chargé, et $\hat{T}_l$ est un couple estimé d'une charge ;

$y$ est une matrice variable de sortie réellement mesurée, et $y = \begin{bmatrix} \omega_m \\ \omega_l \end{bmatrix}$ ;

$\hat{y}$ est une matrice variable de sortie, et $\hat{y} = \begin{bmatrix} \hat{\omega}_m \\ \hat{\omega}_l \end{bmatrix}$ ;

$C$ dépend d'une quantité commandée de l'observateur d'état ;
$L$ est une matrice de compensation de rétroaction de 4 * 2 et est définie en fonction de pôles d'une équation caractéristique pour l'observateur d'état ;
$A, B,$ et $u$ sont des paramètres structurels du système, qui sont respectivement les suivants :

$$A = \begin{bmatrix} -\dfrac{c}{J_m} & \dfrac{c}{J_m} & -\dfrac{K}{J_m} & 0 \\ \dfrac{c}{J_l} & -\dfrac{c}{J_l} & \dfrac{K}{J_l} & -\dfrac{1}{J_l} \\ 1 & -1 & 0 & 0 \\ 0 & 0 & 0 & 0 \end{bmatrix}, \quad B = \begin{bmatrix} \dfrac{1}{J_m} \\ 0 \\ 0 \\ 0 \end{bmatrix}, \quad u = [T_e]$$

dans laquelle $c$ est un coefficient d'amortissement d'un arbre de transmission d'un véhicule électrique, $K$ est la rigidité de l'arbre de transmission du véhicule électrique, $J_m$ est une inertie de rotation du moteur, $J_l$ est une inertie de rotation de la charge, et $T_e$ est le couple cible retardé du moteur.

5. Système de commande de couple pour un moteur de véhicule selon l'une quelconque des revendications 1 à 4, dans lequel le module de calcul de couple compensé est configuré pour calculer le couple compensé ($T_{Dmp}$) du moteur sur la base de la formule suivante :

$$T_{Dmp} = -K_p(\omega_m - \hat{\omega}_l)$$

dans laquelle $K_p$ est un coefficient de commande sans dimension.

6. Procédé de commande de couple pour un moteur de véhicule, lequel procédé est apte à être mis en œuvre par un système de commande de couple pour un moteur de véhicule selon l'une quelconque des revendications 1 à 5, le procédé comprenant les étapes suivantes :

une étape d'obtention : obtention d'un couple cible ($T_{Ref}$) du moteur, d'une vitesse angulaire réelle ($\omega_m$) du moteur, et d'une vitesse angulaire réelle ($\omega_l$) d'une roue ;
une étape de calcul : calcul d'un couple compensé ($T_{Dmp}$) du moteur sur la base du couple cible ($T_{Ref}$) du moteur, de la vitesse angulaire réelle ($\omega_m$) du moteur, et de la vitesse angulaire réelle ($\omega_l$) de la roue ; et
une étape de correction : calcul d'un couple théorique ($T_{Cmd}$) du moteur sur la base du couple cible ($T_{Ref}$) du moteur et du couple compensé ($T_{Dmp}$) du moteur,
dans lequel l'étape de calcul comprend les étapes suivantes :

une étape d'obtention de valeur estimée : calcul d'une vitesse angulaire estimée ($\hat{\omega}_m$) du moteur et d'une vitesse angulaire estimée ($\hat{\omega}_l$) de la roue au moyen d'un observateur linéaire à double boucle fermée, dans lequel la vitesse angulaire estimée ($\hat{\omega}_m$) du moteur et la vitesse angulaire estimée ($\hat{\omega}_l$) de la roue qui sont produites par un observateur d'état sont retardées pour les rendre respectivement synchrones avec la vitesse angulaire réelle acquise ($\omega_m$) du moteur et la vitesse angulaire réelle acquise ($\omega_l$) de la roue, et calcul d'un écart entre la vitesse angulaire estimée ($\hat{\omega}_m$) du moteur et la vitesse angulaire réelle ($\omega_m$) du moteur et un écart entre la vitesse angulaire estimée ($\hat{\omega}_l$) de la roue et la vitesse angulaire réelle ($\omega_l$) de la roue, dans lequel les écarts sont retournés à l'observateur d'état ; et
une étape de calcul de couple compensé : calcul du couple compensé ($T_{Dmp}$) du moteur sur la base de la vitesse angulaire réelle acquise ($\omega_m$) du moteur et de la vitesse angulaire estimée ($\hat{\omega}_l$) résolue de la roue.

**7.** Procédé de commande de couple pour un moteur de véhicule selon la revendication 6, dans lequel, dans l'étape d'obtention, la vitesse angulaire réelle ($\omega_l$) de la roue est acquise en provenance d'un bus CAN de véhicule, et de manière correspondante, dans l'étape d'obtention de valeur estimée, la vitesse angulaire estimée ($\hat{\omega}_l$) de la roue est retardée pour représenter un temps de retard ($\Delta_{t1}$) de délai de transmission de signal du bus CAN, et la vitesse angulaire estimée retardée ($\hat{\omega}_l$) de la roue est produite à une deuxième fréquence pour une résolution des écarts.

**8.** Procédé de commande de couple pour un moteur de véhicule selon la revendication 7, dans lequel dans l'étape d'obtention, la vitesse angulaire réelle ($\omega_m$) du moteur est acquise en provenance d'un capteur de moteur, et de manière correspondante, dans l'étape d'obtention de valeur estimée, la vitesse angulaire estimée ($\hat{\omega}_m$) du moteur est retardée pour représenter un temps de retard ($\Delta_{t2}$) de délai de transmission du capteur, et la vitesse angulaire estimée retardée ($\hat{\omega}_m$) du moteur est produite à une première fréquence pour une résolution des écarts.

**9.** Support de stockage lisible par ordinateur sur lequel est stocké un programme informatique dans lequel lorsque le programme informatique est exécuté par un processeur, un procédé de commande de couple pour un moteur de véhicule selon l'une quelconque des revendications 6 à 8 est mis en œuvre.

**10.** Véhicule, comprenant un système de commande de couple pour un moteur de véhicule selon l'une quelconque des revendications 1 à 5.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2840707 A1